# EUROPEAN PATENT SPECIFICATION

(11) **EP 4 379 908 B1**
(45) Date of publication and mention of the grant of the patent: **18.02.2026**
(21) Application number: 23788498.6
(22) Date of filing: 27.03.2023
(51) Int. Cl.: H01M 10/6555, H01M 10/647, H01M 10/613, H01M 10/625, H01M 50/211, H01M 50/249

(54) **BATTERY MODULE WITH REINFORCED SAFETY**
BATTERIEMODUL MIT ERHÖHTER SICHERHEIT
MODULE DE BATTERIE À SÉCURITÉ AMÉLIORÉE

(30) Priority: 12.04.2022 KR 20220045095
(43) Date of publication of application: 05.06.2024
(60) Divisional application: 26152031.6
(73) Proprietor: LG Energy Solution, Ltd., Seoul 07335 (KR)
(72) Inventor: JANG, Sung-Hwan, Daejeon 34122 (KR); SEONG, Jun-Yeob, Daejeon 34122 (KR)
(74) Representative: Plasseraud IP
(86) International application number: PCT/KR2023/004053
(87) International publication number: WO 2023/200146

(56) References cited:
- EP-A1- 3 588 666
- EP-A1- 3 657 595
- EP-A1- 3 780 251
- EP-A2- 3 349 268
- KR-A- 20150 127 863
- KR-A- 20150 127 863
- KR-A- 20190 053 574
- KR-A- 20200 041 707
- KR-A- 20200 041 707
- KR-B1- 102 057 620
- KR-B1- 102 057 620
- KR-B1- 102 067 710

## Description

### TECHNICAL FIELD

The present disclosure relates to a battery, and more particularly, to a battery module with reinforced safety, and a battery pack and a vehicle including the battery same.

### BACKGROUND ART

As the demand for portable electronic products such as smart phones, tablet PCs and smart watches is rapidly increasing and electric vehicles are broadly propagated, batteries loaded thereon, particularly secondary batteries capable of repeated charging and discharging, are being actively researched.

Currently commercialized secondary batteries include nickel cadmium battery, nickel hydrogen battery, nickel zinc battery, lithium secondary battery, and so on. Among these, the lithium secondary battery has almost no memory effect to ensure free charge and discharge, compared to the nickel-based secondary battery, and the lithium secondary battery is spotlighted due to a very low discharge rate and a high energy density.

The lithium secondary battery mainly uses a lithium-based oxides and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed therebetween, and an exterior, or a battery case, for hermetically accommodating the electrode assembly together with an electrolyte.

Generally, the lithium secondary batteries may be classified into a can-type secondary battery having an electrode assembly included in a metal can and a pouch-type secondary battery having an electrode assembly included in a pouch of an aluminum laminate sheet, depending on the shape of the exterior.

Recently, secondary batteries are widely used for driving or energy storage not only in small devices such as portable electronic devices but also in medium and large devices such as electric vehicles and energy storage systems (ESS). These secondary batteries may constitute one battery module in such a form that a plurality of secondary batteries are electrically connected and are stored together in a module case. **In** addition, a plurality of battery modules may be connected to form one battery pack.

However, when a plurality of secondary batteries (battery cells) or a plurality of battery modules are concentrated in a narrow space, they may be vulnerable to thermal events. **In** particular, when an event such as thermal runaway occurs in one battery cell, a problem in which the thermal event is propagated to other battery cells may occur. When such a thermal propagation phenomenon occurs, serious problems such as fire or explosion may occur in the battery module. **In** addition, when a plurality of battery modules are included in a high-rank device such as one battery pack, battery rack, or energy storage system, problems such as fire or explosion may spread to other battery modules included in the high-rank device.

Moreover, in the case of a medium- or large-sized battery module or battery pack such as an electric vehicle, a large number of battery cells are included to increase output and/or capacity, and thus the risk of thermal chain reaction may increase. In addition, in the case of a battery pack mounted in an electric vehicle or the like, a user such as a driver may exist nearby. Therefore, when a thermal event generated in a specific battery module is not properly controlled and a chain reaction occurs, not only great property damage but also human life damage may be caused.

Examples of background art can be found in EP3657595A1, EP3349268A2, EP3588666A1, EP3780251A1, KR20150127863A, KR20200041707A, and KR102057620B1.

### DISCLOSURE

### Technical Problem

The present disclosure is designed to solve the problems of the related art, and therefore the present disclosure is directed to providing a battery module capable of suppressing thermal events that may occur inside the battery module and enhancing safety, and a battery pack and vehicle including the same.

However, the technical problem to be solved by the present disclosure is not limited to the above, and other problems not mentioned herein will be clearly understood by those skilled in the art from the following disclosure.

### Technical Solution

In one accordance with the independent claim 1, there is provided a battery module, comprising: a plurality of battery cells stacked in at least one direction; a module case configured to accommodate the plurality of battery cells in an inner space; and a heat dissipation member interposed between at least some of the plurality of battery cells and configured to at least partially contact the module case and transfer heat generated from the plurality of battery cells to the module case. The heat dissipation member includes a body portion configured in a plate shape, and an extension portion provided on at least one end of the body portion and configured to be thicker than the body portion. Further, at least a part of the extension portion is inserted into the module case.

**In** addition, the heat dissipation member may be configured so that both ends located at opposite sides are inserted into the module case.

**In** addition, the extension portion may be configured so that the battery cell is seated thereon.

**In** addition, the extension portion may be formed so that at least a part thereof becomes thicker toward an end thereof.

**In** addition, at least two extension portions may be formed at different ends of the body portion, and the at least two extension portions may be made of different materials.

**In** addition, the extension portion may be configured to be detachable from the body portion.

**In** addition, the battery module according to the present disclosure may further comprise a cooling member located outside the module case and configured to absorb heat transferred to the module case and dissipate the heat to the outside, and the heat dissipation member may have the extension portion at an end of a portion where the cooling member is located.

**In** addition, the extension portion may have an unevenness formed on the surface in contact with the module case.

The heat dissipation member may be included in plurality along a stacking direction of the plurality of battery cells, and at least two of the plurality of heat dissipation members may be configured in different shapes.

**In** another aspect of the present disclosure, there is also provided a battery pack, comprising the battery module according to the present disclosure.

**In** still another aspect of the present disclosure, there is also provided a vehicle, comprising the battery module according to the present disclosure.

### Advantageous Effects

According to the present disclosure, it is possible to effectively control thermal events occurring inside the battery module.

**In** particular, according to an embodiment of the present disclosure, when a thermal event occurs in a specific battery cell, propagation of the thermal event to other battery cells may be effectively prevented.

Also, according to one embodiment of the present disclosure, a movement direction of heat may be controlled inside the battery module.

**In** addition, according to an embodiment of the present disclosure, heat generated from battery cells may be more smoothly cooled.

The present disclosure may have various other effects in addition to the above, and such effects will be described in each embodiment, or any effect that can be easily inferred by those skilled in the art will not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing a battery module according to an embodiment of the present disclosure.
FIG. 2 is an exploded perspective view showing the battery module of FIG. 1.
FIG. 3 is a cross-sectional view, taken along the line A1-A1' in FIG. 1.
FIG. 4 is a partially enlarged cross-sectional view schematically showing some components of a battery module according to another embodiment of the present disclosure.
FIG. 5 is a partially enlarged cross-sectional view schematically showing some other components of the battery module according to another embodiment of the present disclosure.
FIG. 6 is a perspective view schematically showing the configuration of a heat dissipation member according to still another embodiment of the present disclosure.
FIG. 7 is a diagram schematically showing some components of a battery module to which the heat dissipation member of FIG. 6 is applied.
FIG. 8 is a perspective view schematically showing the configuration of a heat dissipation member according to still another embodiment of the present disclosure.
FIG. 9 is a partially enlarged view showing that the heat dissipation member of FIG. 8 is interposed between battery cells.
FIG. 10 is a diagram schematically showing some components of a battery module according to still another embodiment of the present disclosure.
FIG. 11 is a diagram schematically showing the configuration of a heat dissipation member according to still another embodiment of the present disclosure.
FIG. 12 is a diagram schematically showing some components of a battery module according to still another embodiment of the present disclosure.
FIG. 13 is a perspective view schematically showing the configuration of a heat dissipation member according to still another embodiment of the present disclosure.
FIG. 14 is a diagram schematically showing some components of a battery module to which the heat dissipation member of FIG. 13 is applied.
FIG. 15 is a perspective view schematically showing the configuration of a heat dissipation member according to still another embodiment of the present disclosure.
FIG. 16 is a cross-sectional view schematically showing some components of a battery module according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure. The scope of the present invention is defined in the appended claims.

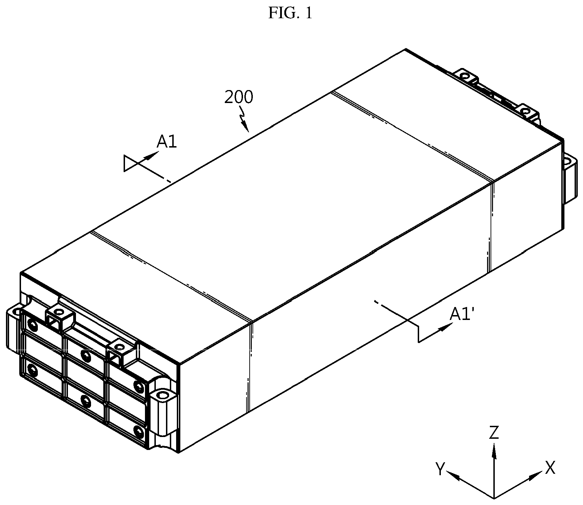

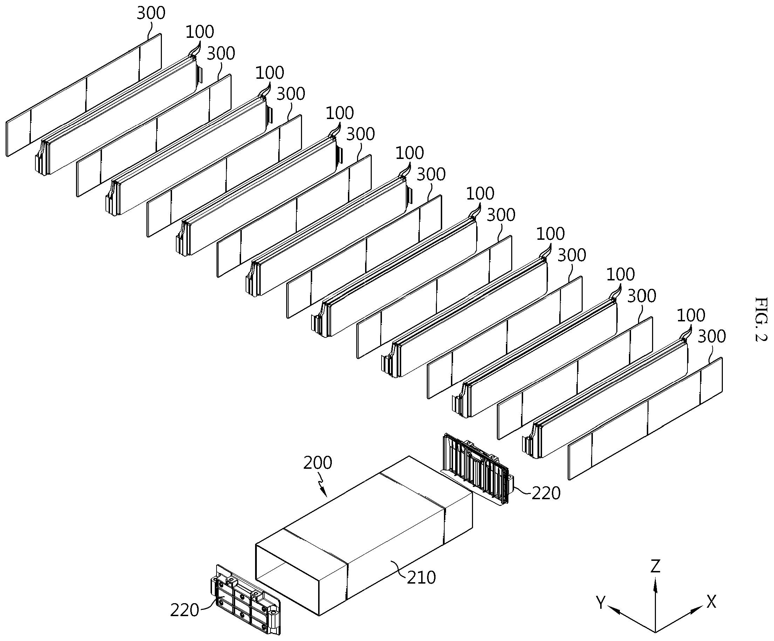

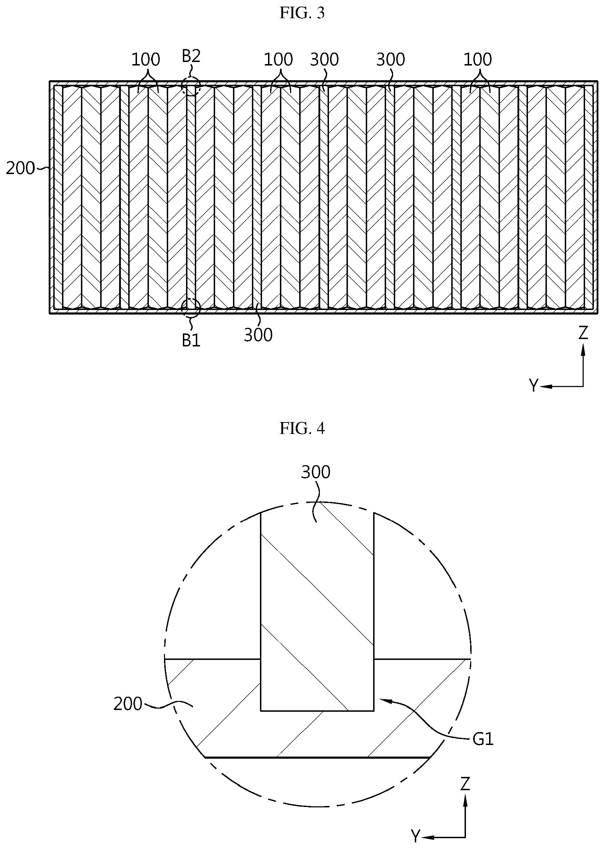

FIG. 1 is a perspective view schematically showing a battery module according to an embodiment of the present disclosure, and FIG. 2 is an exploded perspective view showing the battery module of FIG. 1. Also, FIG. 3 is a cross-sectional view, taken along the line A1-A1' in FIG. 1.

Referring to FIGS. 1 to 3, the battery module according to the present disclosure includes a battery cell 100, a module case 200, and a heat dissipation member 300.

The battery cell 100 may be included in plurality in the battery module. Also, each battery cell 100 may mean a secondary battery. The secondary battery may include an electrode assembly (including a positive electrode plate, a negative electrode plate, and a separator), an electrolyte, and a battery case. The plurality of battery cells 100 may be electrically connected to each other. For example, the plurality of battery cells 100 may be electrically connected to each other in series and/or parallel through a bus bar or the like.

The plurality of battery cells 100 may be included in the battery module in a stacked form. That is, it may be regarded that the battery module according to the present disclosure includes a cell stack (cell assembly) in which the battery cells 100 are stacked in at least one direction. For example, as shown in FIG. 2, the plurality of battery cells 100 may be arranged side by side in the left and right direction (Y-axis direction).

The module case 200 may have an empty space formed therein, and may be configured to accommodate the plurality of battery cells 100 in the inner space. For example, the module case 200 may include a body frame 210 and an end frame 220. Here, the body frame 210 may include an upper plate, a lower plate, a left plate, and a right plate to form an accommodation space, and the stack of battery cells 100 may be accommodated in the accommodation space. The end frame 220 may be coupled with the body frame 210 to cover an open portion of the body frame 210. More specifically, the body frame 210 may be configured to have front and rear openings, and the end frame 220 may be configured to be coupled to the front and rear openings of the body frame 210.

The heat dissipation member 300 may be interposed between at least some battery cells 100 among the plurality of battery cells 100. That is, the heat dissipation member 300 may be configured to be interposed in the cell stack accommodated in the module case 200, particularly between two adjacent battery cells 100. Moreover, as shown in FIGS. 2 and 3, the heat dissipation member 300 may be included in plurality in one battery module. **In** this case, the plurality of heat dissipation members 300 may be spaced apart from each other by a predetermined distance in the stacking direction of the battery cells 100 (Y-axis direction in the drawing). **In** addition, one or more battery cells 100 may be interposed between two adjacent heat dissipation members 300.

The heat dissipation member 300 may be configured to at least partially contact the module case 200. **In** particular, at least one end of the heat dissipation member 300 may contact the module case 200. For example, the heat dissipation member 300 may be configured such that its lower end contacts the module case 200, as indicated by B1 in FIG. 3. Alternatively, the heat dissipation member 300 may be configured such that its upper side end contacts the module case 200, as indicated by B2 in FIG. 3.

The heat dissipation member 300 may be configured to transfer heat generated from the plurality of battery cells 100 to the module case 200. That is, when heat is generated from any battery cell 100 among the plurality of battery cells 100, the heat dissipation member 300 may absorb the generated heat. Also, the heat dissipation member 300 may transfer the absorbed heat to the module case 200. **In** particular, the heat dissipation member 300 may transfer heat to the module case 200 through a portion in contact with the module case 200. Also, the heat transferred to the module case 200 in this way may be discharged to the outside of the module case 200.

According to this embodiment of the present disclosure, when a thermal event such as thermal runaway occurs from a specific battery cell 100 in the battery module including a plurality of battery cells 100 therein, propagation of the thermal event to other battery cells 100 inside the battery module may be prevented or reduced. Moreover, according to this embodiment, a thermal runaway propagation phenomenon or the like inside the battery module may be prevented. Also, according to this embodiment, the heat generated from the battery cell 100 may be smoothly and quickly discharged to the outside via the heat dissipation member 300 and the module case 200. Thus, it is possible to provide a battery module with excellent cooling performance.

Also, the heat dissipation member 300 may be provided at the outer side of the cell stack as shown in FIGS. 2 and 3. That is, the heat dissipation member 300 may be interposed between the outermost battery cell 100 of the cell stack and the module case 200. More specifically, referring to FIG. 2, the heat dissipation members 300 may be provided on the left and right sides of the cell stack in which a plurality of battery cells 100 are stacked in the left and right direction (Y-axis direction).

According to this embodiment, it is possible to further improve the cooling performance of the battery module and also possible to suppress propagation of heat or flame to other components outside the battery module, such as other battery modules or control units such as BMS (Battery Management System).

The module case 200 and/or the heat dissipation member 300 may include a material having high thermal conductivity to absorb and transfer heat generated from the battery cell 100. In particular, the module case 200 and/or the heat dissipation member 300 may be made of a material that does not soften or melt even at a high temperature, for example 1000°C or higher, or may include such a material. Representatively, the module case 200 and/or the heat dissipation member 300 may include a metal material. As a more specific example, the module case 200 and/or the heat dissipation member 300 may be made of SUS (stainless steel) or a composite material including the same. The SUS material has low possibility of softening or melting due to high temperature, compared to metals such as aluminum. Therefore, in a situation such as thermal runaway, the problem of deteriorating safety due to collapse of the structure of the module case 200 or the heat dissipation member 300 may be more effectively prevented. In addition, the module case 200 and/or the heat dissipation member 300 may be made of or include other metal materials that have high thermal conductivity and do not soften or melt at high temperatures.

According to this embodiment of the present disclosure, high-temperature durability of the module case 200 and the heat dissipation member 300 may be secured. Therefore, even when a high temperature situation occurs inside the battery module due to thermal runaway, softening or melting of the heat dissipation member 300 or the module case 200 may be prevented. Therefore, the safety of the battery module may be further improved by preventing structural collapse of the heat dissipation member 300 or the module case 200.

The heat dissipation member 300 is configured such that at least one end is inserted into the module case 200. This will be described in more detail with reference to FIG. 4 and the like.

FIG. 4 is a partially enlarged cross-sectional view schematically showing some components of a battery module according to another embodiment of the present disclosure. For example, FIG. 4 may be regarded as a modified example of the portion B1 of FIG. 3. Meanwhile, various embodiments are described in this specification, including this embodiment, and features of the corresponding embodiment to which features of other embodiments can be applied identically or similarly will not be described in detail, and different features of each embodiment will be described in detail.

Referring to FIG. 4, the lower end of the heat dissipation member 300 may be inserted into the module case 200. To this end, a lower insert groove may be formed on a lower inner surface of the module case 200, as indicated by G1 in FIG. 4. Also, the lower end of the heat dissipation member 300 may be inserted into the lower insert groove G1 of the module case 200.

According to this embodiment of the present disclosure, inside the battery module, the fixing force of the heat dissipation member 300 may be improved. Therefore, even in a situation where vibration or shock is applied to the battery module, the position of the heat dissipation member 300 may be stably maintained due to the insertion and coupling configuration between the heat dissipation member 300 and the module case 200. Therefore, the movement of the battery cells 100 inside the battery module may be prevented, and the stacking state of the cell stack may be stably maintained. In addition, when a situation such as thermal runaway occurs, gas or the like may be generated from a specific battery cell 100, and even if the pressure of the generated gas is applied to the heat dissipation member 300, the heat dissipation member 300 may be prevented from moving.

Moreover, according to this embodiment, due to the insertion configuration between the heat dissipation member 300 and the module case 200, it is possible to more effectively prevent flame, gas, or the like from being transferred between spaces divided by the heat dissipation member 300. Also, according to this embodiment, since a contact area between the heat dissipation member 300 and the module case 200 increases, heat transfer performance from the heat dissipation member 300 to the module case 200 may be increased.

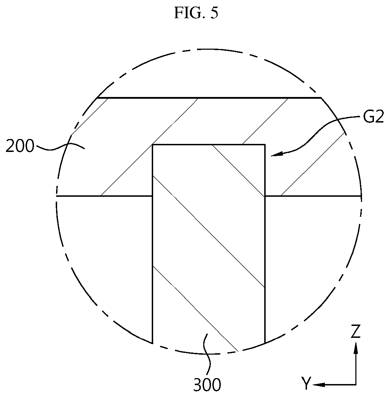

In addition, the heat dissipation member 300 may be configured so that both ends positioned at opposite sides are inserted into the module case 200. This will be described in more detail with reference to FIG. 5 along with FIG. 4.

FIG. 5 is a partially enlarged cross-sectional view schematically showing some other components of the battery module according to another embodiment of the present disclosure. For example, FIG. 5 may be regarded as a modified example of the portion B2 of FIG. 3.

Referring to FIG. 5, the upper end of the heat dissipation member 300 may be inserted into the module case 200. In particular, an upper insert groove may exist on an upper inner surface of the module case 200, as indicated by G2. Also, the upper end of the heat dissipation member 300 may be inserted into the upper insert groove G2 of the module case 200.

In particular, the configuration shown in FIG. 5 and the configuration shown in FIG. 4 may be included for one battery module. That is, the heat dissipation member 300 may be configured such that both ends, namely a lower end and an upper end, located at opposite sides are inserted into the module case 200.

According to this embodiment of the present disclosure, the fixing force of the heat dissipation member 300 is further improved, so that the position of the heat dissipation member 300 may be stably maintained even in the event of external shock or vibration, internal fire or gas, or the like. In addition, due to this, the cell stack having a plurality of battery cells 100 may stably maintain its position or interval constantly. In addition, according to this embodiment, by preventing gas, flame, or the like from leaking through the gap between the heat dissipation member 300 and the inner surface of the module case 200, propagation of gas, flame, or the like between the battery cells 100 may be prevented more reliably. Also, in this embodiment, heat transfer performance may be further improved by increasing the contact area between the heat dissipation member 300 and the module case 200.

At least a part of the module case 200 may be configured in the form of a mono frame. In particular, the module case 200 may include a body frame 210 and an end frame 220, and the body frame 210 may be configured as a mono frame. In this case, the body frame 210 includes an upper plate, a lower plate, a left plate, and a right plate, where the upper plate, the lower plate, the left plate, and the right plate may be manufactured in an integrated form. That is, the body frame 210 may be formed in the form of a rectangular tube having a hollow inside. Also, the front and rear of the body frame 210 may be configured in an open form.

In particular, in an embodiment in which the lower end and the upper end of the heat dissipation member 300 are inserted into the module case 200 as in the embodiments of FIGS. 3 to 5, the module case 200 may include a mono frame. In addition, a lower insert groove G1 and an upper insert groove G2 are formed on the upper surface of the lower plate and the lower surface of the upper plate of the mono frame, respectively, so that the lower end and the upper end of the heat dissipation member 300 may be inserted therein. In this case, the heat dissipation member 300 may be inserted into the mono frame in a sliding manner through the front or rear open portion of the mono frame in a state of being fitted into the lower insert groove G1 and the upper insert groove G2. According to this embodiment of the present disclosure, the assembly process of inserting the heat dissipation member 300 into the module case 200 and further inserting the heat dissipation member 300 into the insert groove of the module case 200 may be performed more smoothly. Also, according to this embodiment, since the distance between the upper and lower plates of the module case 200 is kept constant, the position of the heat dissipation member 300 may be maintained more stably.

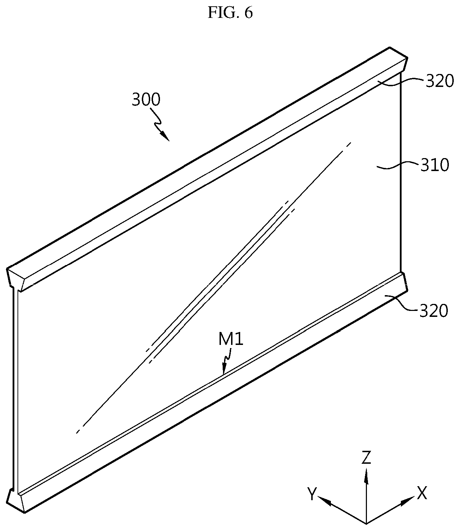

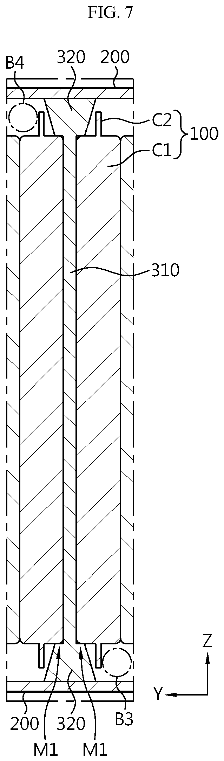

FIG. 6 is a perspective view schematically showing the configuration of a heat dissipation member 300 according to still another embodiment of the present disclosure, and FIG. 7 is a diagram schematically showing some components of a battery module to which the heat dissipation member 300 of FIG. 6 is applied. In FIG. 7, for convenience of description, two battery cells 100 and one heat dissipation member 300 interposed therebetween are shown.

Referring to FIGS. 6 and 7, the heat dissipation member 300 may include a body portion 310 and an extension portion 320. Here, the body portion 310 may be configured in a plate form. For example, the body portion 310 may be configured in the form of a plate erected in a vertical direction and interposed between two battery cells 100 arranged in a horizontal direction. In addition, the extension portion 320 may be provided on at least one end of the body portion 310. The extension portion 320 is configured to be thicker than the body portion 310. For example, the extension portion 320 may be provided at the upper and lower ends of the body portion 310. The extension portion 320 is configured to extend in a horizontal direction, such as a left and right direction (Y-axis direction in the drawing) more than the body portion 310. That is, the extension portion 320 is configured to be thicker than the body portion 310 in the left and right direction.

**In** particular, in the heat dissipation member 300, the plate-shaped body portion 310 may be interposed between the battery cells 100, and the extension portion 320 may be located at a portion outside the space between the battery cells 100. Moreover, the plurality of battery cells 100 may be pouch-type batteries. **In** the case of such a pouch-type battery, an electrode assembly and an electrolyte may be accommodated in the central portion to form an accommodation portion C1, and a pouch exterior material may be sealed at an edge of the accommodation portion C1 to form a sealing portion C2. At this time, the body portion 310 of the heat dissipation member 300 may be interposed between the accommodation portions C1 of the pouch-type batteries, and the extension portion 320 of the heat dissipation member 300 may be located in a portion other than the accommodation portions C1 of the pouch-type batteries, particularly between the sealing portions C2 of the pouch-type batteries. Since the space between the sealing portions C2 of the adjacent pouch-type batteries is wider than the space between the accommodation portions C1, the extension portion 320 with a great thickness may be positioned.

Also, the extension portion 320 may be formed at a portion of the heat dissipation member 300 that contacts the module case 200. For example, as shown in FIG. 7, the top end and the bottom end of the heat dissipation member 300 may contact the module case 200, and the extension portion 320 may be positioned at the top end and the bottom end of the heat dissipation member 300. In this case, it may be regarded that the extension portion 320 of the heat dissipation member 300 is in contact with the module case 200.

According to this embodiment of the present disclosure, heat dissipation performance through the heat dissipation member 300 may be improved without widening the space between the cell stacks. In particular, in this embodiment, the contact area between the heat dissipation member 300 and the module case 200 may be increased through the extension portion 320. Accordingly, heat transfer performance from the heat dissipation member 300 to the module case 200 may be improved. Also, according to this embodiment, due to the increase in the contact area between the heat dissipation member 300 and the module case 200, the shape or position of the heat dissipation member 300, particularly the standing state of the heat dissipation member 300, may be maintained more stably inside the module case 200.

In addition, according to this embodiment, heat or flame transfer suppression performance between cells may be further improved. For example, when pouch-type batteries form a stack and are included in the battery module, high-temperature gas, flame, or the like discharged from the battery cell 100 may located in the space between the sealing portions C2, which is a relatively wide space inside the module case 200. At this time, since the extension portion 320 formed think is located in the space between the sealing portions C2, the space between the sealing portions C2 of cells may be more reliably distinguished. Accordingly, it is possible to more effectively prevent gas, flame, or the like from being transferred between cells through the space where the sealing portion C2 is formed.

The extension portion 320 may be configured such that the battery cell 100 may be seated thereon. For example, referring to FIGS. 6 and 7, the heat dissipation member 300 may have a seating part formed in the lower extension portion 320 so that the battery cell 100 may be seated thereon, as shown by M1. Moreover, since the battery cell 100 may be located at the left and right sides of the heat dissipation member 300, respectively, separate seating parts M1 may be formed at the left and right sides of the lower extension portion 320 of the heat dissipation member 300, respectively. In addition, the left battery cell 100 and the right battery cell 100 may be seated on the seating parts M1, respectively.

In particular, as shown in FIG. 7, when the battery cell 100 is a pouch-type battery, the accommodation portion C1 of the pouch-type battery may be seated on the seating part M1 formed in the extension portion 320 of the heat dissipation member 300. That is, in the configuration of FIG. 7, the accommodation portion C1 of the left battery cell 100, particularly a lower right portion of the accommodation portion C1, may be seated on the left seating part M1 of the heat dissipation member 300. In addition, in the configuration of FIG. 7, the accommodation portion C1 of the right battery cell 100, particularly a lower left portion of the accommodation portion C1, may be seated on the right seating part M1 of the heat dissipation member 300.

According to this embodiment of the present disclosure, the stacking state of the battery cells 100 may be stably maintained through the seating part M1 included in the heat dissipation member 300. In particular, in the case of a pouch-type battery, it may be difficult to stably maintain a structure in which a plurality of pouch-type batteries are stacked in the left and right direction in a state of being erected in the upper and lower direction due to their shape characteristics. However, according to this embodiment, since each pouch-type cell is stably seated on the seating part M1 of the heat dissipation member 300 in a state of being erected, the horizontal stacking state of the pouch-type cells may be stably maintained.

Also, according to this embodiment, the contact area between the battery cell 100 and the heat dissipation member 300 may be increased. That is, in this embodiment, the battery cell 100 and the body portion 310 of the heat dissipation member 300 may contact each other, and also the battery cell 100 and the extension portion 320 of the heat dissipation member 300 may contact each other. For example, when the battery cell 100 is a pouch-type battery, the lower end of the accommodation portion C1 of the pouch-type battery and the seating part M1 of the heat dissipation member 300 may come into contact with each other. Therefore, in this case, heat transfer performance between the battery cell 100 and the heat dissipation member 300 is improved, so that the cooling performance and thermal runaway prevention performance of the battery module may be further improved.

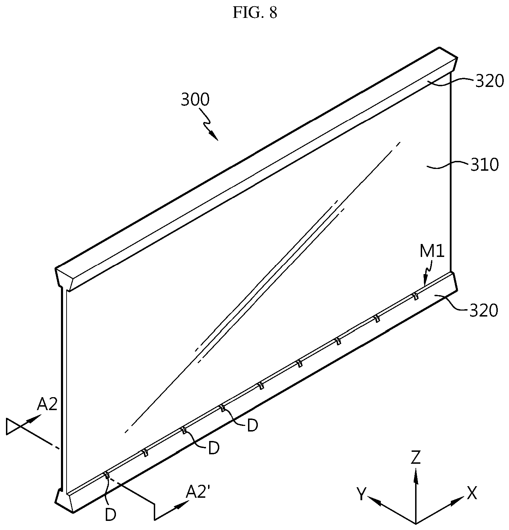

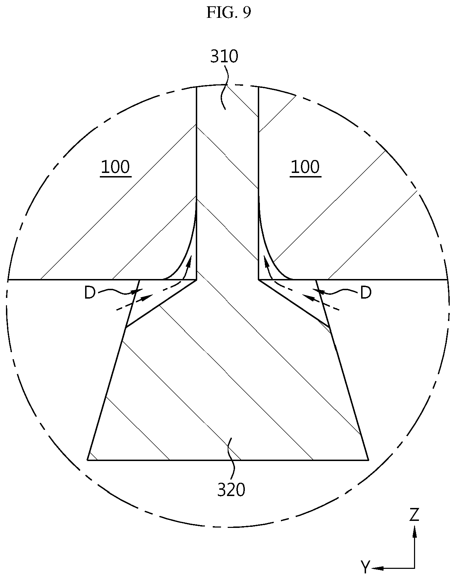

The battery module according to the present disclosure may further include a thermal resin. The thermal resin is a material for increasing heat transfer efficiency between different members, and various heat transfer materials known at the time of filing of this application may be included as the thermal resin of the present disclosure. For example, in the embodiment of FIG. 7, the thermal resin may be filled in the space between the battery cell 100 and the module case 200, which is a portion indicated by B3 and B4. In one embodiment of the present disclosure, the heat transfer performance of the thermal resin may be further improved, which will be described in more detail with reference to FIGS. 8 and 9.

FIG. 8 is a perspective view schematically showing the configuration of a heat dissipation member 300 according to still another embodiment of the present disclosure, and FIG. 9 is a partially enlarged view showing that the heat dissipation member 300 of FIG. 8 is interposed between battery cells 100. For example, FIG. 9 may be regarded as showing a partial cross-sectional view along the line A2-A2' in a state where the battery cell 100 is located on the left and right sides of the heat dissipation member 300 of FIG. 8, respectively.

Referring to FIGS. 8 and 9, an inflow groove may be formed in the extension portion 320 of the heat dissipation member 300, as indicated by D. The inflow groove D may be formed to be dug from the side surface of the extension portion 320 to a portion where the seating part M1 is formed. For example, the inflow groove D may be formed in the lower extension portion 320 of the heat dissipation member 300 and may have a shape that is concavely dug downward from an upper surface of the lower extension portion 320. In addition, the inflow groove D may be formed to be dug to extend from the upper surface of the lower extension portion 320 to the side surface. Also, although not shown in the drawings, the inflow groove D may also be formed in the upper extension portion 320 of the heat dissipation member 300.

According to this embodiment of the present disclosure, the heat transfer performance of the thermal resin may be further improved. For example, in this embodiment, the thermal resin filled between the battery cell 100 and the module case 200 may flow into the space between the battery cell 100 and the heat dissipation member 300 through the inflow groove D, as indicated by a dotted arrow in FIG. 9. Accordingly, heat transfer performance between the battery cell 100 and the heat dissipation member 300 may be further increased. In particular, in the process of manufacturing or assembling the battery module, the thermal resin may be filled in the space between the battery cell 100 and the module case 200 in a fluid state, like gel or sol. At this time, the thermal resin having fluidity may easily penetrate into the space between the battery cell 100 and the heat dissipation member 300 through the inflow groove D.

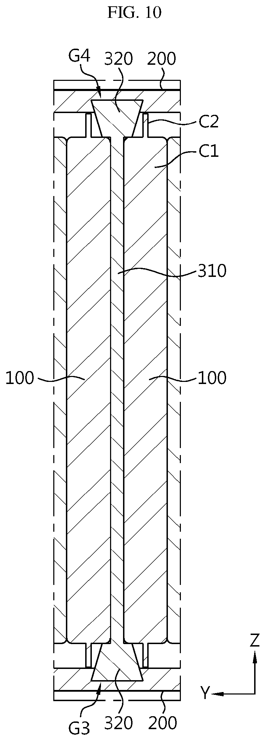

FIG. 10 is a diagram schematically showing some components of a battery module according to still another embodiment of the present disclosure. For example, FIG. 10 may be regarded as a modified example of FIG. 7.

Referring to FIG. 10, the extension portion 320 of the heat dissipation member 300 is inserted into the module case 200. To this end, an insert groove may be formed on the inner surface of the module case 200 in a shape corresponding to the shape of the extension portion 320. For example, as indicated by G3 on the upper surface of the lower plate of the module case 200 in FIG. 10, an insert groove concave downward may be formed. Also, the lower extension portion 320 of the heat dissipation member 300 may be inserted into the insert groove G3. In addition, as indicated by G4 on the lower surface of the upper plate of the module case 200 in FIG. 10, an insert groove concave upward may be formed. In addition, the upper extension portion 320 of the heat dissipation member 300 may be inserted into the insert groove G4.

According to this embodiment of the present disclosure, the coupling force between the heat dissipation member 300 and the module case 200 may be improved due to fitting between the extension portion 320 and the insert grooves G3, G4. Therefore, even in a situation such as external shock or internal gas generation, components inside the battery module may be stably maintained without leaving their positions or collapsing. Also, according to this embodiment, the contact area between the heat dissipation member 300 and the module case 200 may increase. Accordingly, heat transfer efficiency from the heat dissipation member 300 to the module case 200 may be increased. Therefore, according to this embodiment of the present disclosure, the cooling performance and heat propagation prevention performance of the battery module may be further improved.

In addition, the extension portion 320 of the heat dissipation member 300 may be configured to become thicker toward the end.

For example, referring to FIG. 10, the lower extension portion 320 of the heat dissipation member 300 may be configured to have a portion whose thickness increases in the lower direction. In addition, the upper extension portion 320 of the heat dissipation member 300 may be configured to have a portion whose thickness increases in the upper direction. Moreover, the extension portion 320 of the heat dissipation member 300 may have a trapezoidal cross section.

According to this embodiment of the present disclosure, the contact area between the lower surface of the heat dissipation member 300 and the module case 200 is increased, so that the heat transfer performance and coupling force between the heat dissipation member 300 and the module case 200 may be improved. Moreover, when the cross section is formed in a trapezoidal shape as in this embodiment, a space in which the battery cell 100 may be stably seated is provided, and sufficient contact with the module case 200 may be provided.

Moreover, as shown in FIG. 10, in the embodiment in which the extension portion 320 of the heat dissipation member 300 is inserted into the module case 200, when the extension portion 320 is formed to become gradually thicker toward the end, the coupling force between the heat dissipation member 300 and the module case 200 may be further improved. For example, in the configuration shown in FIG. 10, the lower extension portion 320 of the heat dissipation member 300 may not be easily separated from the lower plate of the module case 200 in the upper direction. Also, in the embodiment of FIG. 10, the upper extension portion 320 of the heat dissipation member 300 may not be easily separated from the upper plate of the module case 200 in the downward direction. Also, in the embodiment of FIG. 10, movement of the heat dissipation member 300 in the left and right direction (Y-axis direction) may be suppressed.

As described in the former embodiment, two or more extension portions 320 may be formed at different ends of the body portion 310. In this case, the two or more extension portions 320 may be made of different materials.

For example, as shown in FIG. 10, the heat dissipation member 300 may be configured such that the extension portion 320 is provided at both upper and lower sides of the body portion 310. In this case, the upper extension portion 320 and the lower extension portion 320 may be made of different materials.

In particular, two extension portions 320 may be made of materials having different thermal conductivity. For example, in the embodiment of FIG. 10, the heat dissipation member 300 may be configured such that the upper extension portion 320 and the lower extension portion 320 have different thermal conductivities. As a more specific example, in the embodiment of FIG. 10, the lower extension portion 320 may be made of a material having higher thermal conductivity than the upper extension portion 320.

According to this embodiment of the present disclosure, it is possible to derive a path through which heat is transferred from the heat dissipation member 300. For example, in the embodiment of FIG. 10, when the thermal conductivity of the lower extension portion 320 is higher than the thermal conductivity of the upper extension portion 320, the heat absorbed from the battery cell 100 to the body portion 310 may be induced to move toward the lower extension portion 320 rather than the upper extension portion 320. **In** particular, when a cooling member is located at a lower side of the module case 200 as will be described later, it is preferable to induce heat toward the lower extension portion 320.

Also, the two extension portions 320 different from each other may be made of materials having different melting points. For example, in the embodiment of FIG. 10, the upper extension portion 320 may be made of a material with a higher melting point than the lower extension portion 320. **In** this case, the lower extension portion 320 may be made of a material having a lower melting point than the upper extension portion 320 but having high thermal conductivity.

According to this embodiment of the present disclosure, different functions may be partially assigned to the heat dissipation member 300. For example, as in this embodiment, the upper extension portion 320 is made of a material with a high melting point, so that the heat dissipation member 300 may not melt or collapse but be maintained stably even in a flame or high temperature that is easily directed toward the upper portion inside the module case 200. **In** addition, since the lower extension portion 320 is made of a material having high thermal conductivity, the heat absorbed from the battery cell 100 may be smoothly discharged toward the lower portion of the battery module through the heat dissipation member 300.

As another example, the upper extension portion 320 may be made of a polymer material having low thermal conductivity, and the lower extension portion 320 may be made of a metal material having high thermal conductivity. **In** this case, the heat absorbed by the body portion 310 of the heat dissipation member 300 is mainly directed toward the lower portion, and the heat toward the upper portion may be suppressed as much as possible. This embodiment may be applied especially when it is undesirable that heat is applied toward the upper portion of the battery module. For example, when other components such as other battery modules or BMS are located above the battery module, or when a user such as a driver of an electric vehicle is located above the battery module, safety may be further improved by blocking heat transferred toward the upper portion of the battery module as in this embodiment.

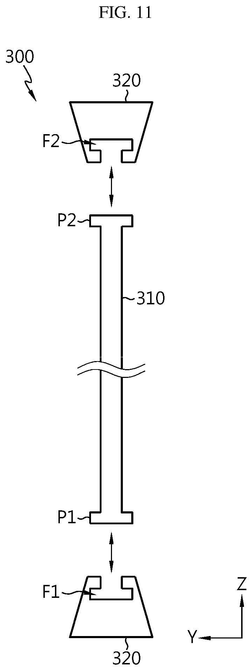

FIG. 11 is a diagram schematically showing the configuration of a heat dissipation member 300 according to still another embodiment of the present disclosure.

Referring to FIG. 11, the extension portion 320 may be configured to be detachable from the body portion 310. For example, the lower extension portion 320 provided in the heat dissipation member 300 may be configured to be detachable from or mounted to the bottom end of the body portion 310. In addition, the upper extension portion 320 provided in the heat dissipation member 300 may be configured to be detachable from or mounted to the top end of the body portion 310.

According to this embodiment of the present disclosure, the heat dissipation member 300 including the body portion 310 and the extension portion 320 may be manufactured more easily. In particular, according to this embodiment, as described above, a configuration in which different extension portions 320 are made of different materials may be more easily implemented. In addition, according to this embodiment, the body portion 310 may be used in common, and the extension portion 320 of an appropriate material or shape may be used according to the internal or external structure of the battery module or according to situations. For example, a material having high thermal conductivity may be applied to the lower extension portion 320 for some battery modules, and a material having high thermal conductivity may be applied to the upper extension portion 320 for other battery modules. Alternatively, for other battery modules, a material having excellent flame performance may be applied to the upper extension portion 320. In this way, according to this embodiment of the present disclosure, the heat dissipation member 300 may be configured in various ways as necessary according to circumstances.

Also, according to this embodiment, the battery module may be assembled more easily. For example, in a state where only the lower extension portion 320 is coupled to the body portion 310 and the upper extension portion 320 is separated, a plurality of battery cells 100 and heat dissipation members 300 may be alternately stacked, and after the stacking is completed, the upper extension portion 320 may be coupled to the upper portion of each heat dissipation member 300. In this case, it is possible to prevent the stacking process of the battery cells 100 and the heat dissipation members 300 from being hindered by the upper extension portion 320.

In this embodiment, the body portion 310 and the extension portion 320 may be configured to be fitted. For example, referring to FIG. 11, fastening protrusions protruding in the left and right direction may be formed on the lower and upper ends of the body portion 310, as indicated by P1 and P2. Also, as indicated by F1 and F2, the lower extension portion 320 and the upper extension portion 320 may have fastening grooves formed in a shape corresponding to the shapes of the fastening protrusions P1, P2.

According to this embodiment of the present disclosure, due to the fitting configuration of the body portion 310 and the extension portion 320, the extension portion 320 may not be easily separated from the body portion 310 in a state where it is coupled to the body portion 310. In particular, according to this embodiment, in order to separate the extension portion 320 from the body portion 310, the extension portion 320 must be moved in the front and rear direction (X-axis direction), and it may be difficult to move and separate the extension portion 320 in the upper and lower direction (Z-axis direction) or the left and right direction (Y-axis direction). Therefore, in this case, the detachable configuration of the body portion 310 and the extension portion 320 may be more easily implemented.

Meanwhile, in the embodiment of FIG. 11, it is illustrated that both the upper extension portion 320 and the lower extension portion 320 are detachable, but some of them may be maintained in a fixed state or manufactured in an integrated state, and only other portions may be detachably configured. For example, in the embodiment of FIG. 11, the lower extension portion 320 may be integrally formed with the body portion 310 so as not to be separated from each other, and the upper extension portion 320 may be detachably configured so as to be separable from the body portion 310.

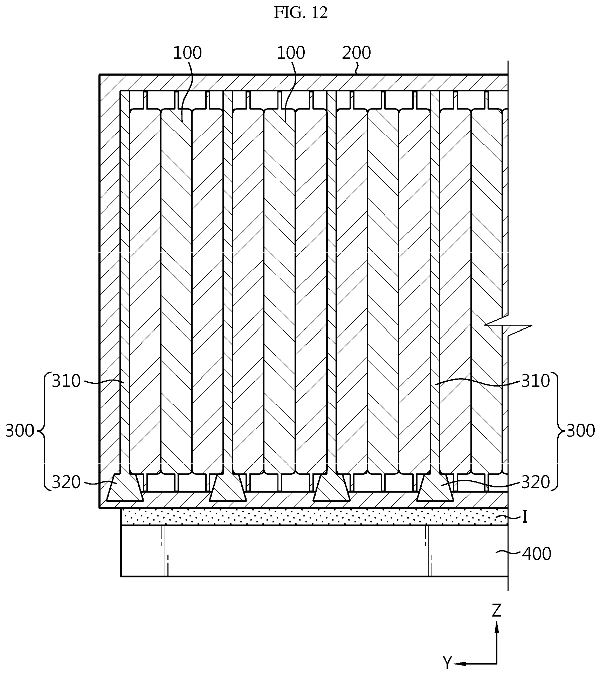

FIG. 12 is a diagram schematically showing some components of a battery module according to still another embodiment of the present disclosure.

Referring to FIG. 12, the battery module according to the present disclosure may further include a cooling member 400. The cooling member 400 may be positioned outside the module case 200 to absorb heat transferred to the module case 200 and dissipate the absorbed heat to the outside. In particular, the cooling member 400 may be configured to allow a cooling medium such as cooling water to flow therein, so that the heat of the module case 200 may be more easily absorbed and discharged to the outside of the module. As the configuration of the cooling member 400, various types of cooling configurations known at the time of filing of this application may be employed, and the present disclosure is not limited by the specific configuration of the cooling member 400. For example, the cooling member 400 may be a heatsink.

In this case, the heat dissipation member 300 may have an extension portion 320 provided at an end of a portion where the cooling member 400 is located. For example, as shown in FIG. 12, when the cooling member 400 is positioned below the module case 200, the extension portion 320 may be positioned at the bottom end of the heat dissipation member 300. That is, the extension portion 320 may not be provided at the upper end of the heat dissipation member 300.

According to this embodiment of the present disclosure, the heat absorbed into the body portion 310 may be moved more smoothly toward a portion where the cooling member 400 is located through the extension portion 320. Accordingly, the heat oriented toward the cooling member 400 via the heat dissipation member 300 and the module case 200 may be rapidly moved through a shortest path. Therefore, cooling performance and heat propagation suppression performance of the battery module may be improved.

Meanwhile, when the cooling member 400 is provided at one side of the battery module as described above, various embodiments described above, particularly the embodiments described in FIGS. 7 to 11, may also be applied. For example, with respect to the embodiment of FIG. 12, the heat dissipation member 300 as shown in FIG. 10 or 11 may be applied, and the lower extension portion 320 may be made of a material having higher thermal conductivity than the upper extension portion 320.

In addition, as in this embodiment, when the cooling member 400 is located at one side of the module case 200, a heat transfer material such as a thermal interface material (TIM) may be interposed between the cooling member 400 and the module case 200, as indicated by I in FIG. 12.

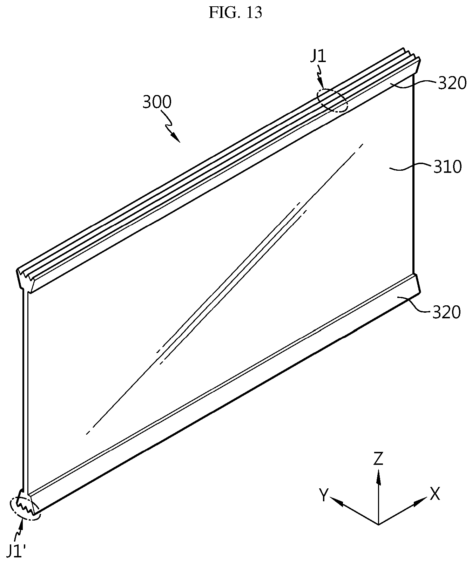

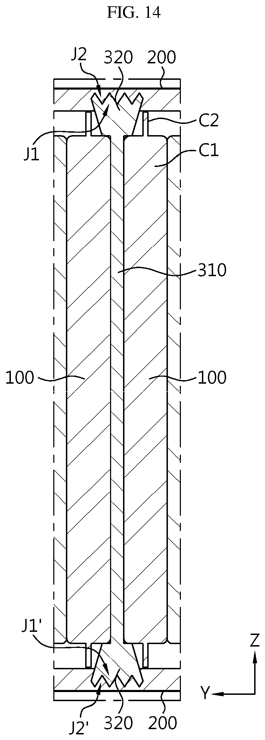

FIG. 13 is a perspective view schematically showing the configuration of a heat dissipation member 300 according to still another embodiment of the present disclosure, and FIG. 14 is a diagram schematically showing some components of a battery module to which the heat dissipation member 300 of FIG. 13 is applied.

Referring to FIGS. 13 and 14, the extension portion 320 of the heat dissipation member 300 may have an unevenness formed on an outer surface in contact with the module case 200. Here, the unevenness may represent a shape in which concave portions and convex portions are repeatedly arranged. More specifically, the upper extension portion 320 of the heat dissipation member 300 may have a first unevenness formed on the upper surface, as indicated by J1. In addition, the lower extension portion 320 of the heat dissipation member 300 may have a first unevenness formed on the lower surface, as indicated by J1'. The first unevenness of the heat dissipation member 300 may be configured such that concave portions and convex portions are repeatedly arranged in the left and right direction (Y-axis direction) in which the plurality of battery cells 100 are stacked.

In addition, the module case 200 may also have an unevenness formed on a portion in contact with the extension portion 320 of the heat dissipation member 300. That is, as indicated by J2 in FIG. 14, a second unevenness having a shape corresponding to the first unevenness J1 of the heat dissipation member 300 may be formed on a portion of the upper inner surface of the module case 200 in contact with the upper extension portion 320 of the heat dissipation member 300. In addition, as indicated by J2' in FIG. 14, a second unevenness having a shape corresponding to the first unevenness J1' of the heat dissipation member 300 may be formed on a portion of the lower inner surface of the module case 200 in contact with the lower extension portion 320 of the heat dissipation member 300. Moreover, as described above in the embodiment of FIG. 10, insert grooves G3, G4 may be formed in the module case 200 so that the extension portion 320 is inserted. At this time, the second unevenness J2, J2' may be formed on the inner surface of the insert grooves G3, G4.

In this embodiment, the unevenness J1, J1' of the extension portion 320 and the unevenness J2, J2' of the module case 200 may have shapes that are engaged with each other. In particular, in the first unevenness J1, J1' of the extension portion 320 and the second unevenness J2, J2' of the module case 200 may be configured such that the protrusive portion and the concave portion are fitted with each other, and the surfaces of the protrusive portion and the concave portion are in contact with each other.

According to this embodiment of the present disclosure, heat transfer performance between the heat dissipation member 300 and the module case 200 may be further improved. In particular, in this embodiment, the contact area between the extension portion 320 of the heat dissipation member 300 and the module case 200 may be enlarged. Thus, more heat may be transferred through the contact portion. Therefore, in this case, cooling performance through the heat dissipation member 300 may be further improved.

Also, according to this embodiment, the coupling force between the heat dissipation member 300 and the module case 200 may be improved due to unevenness coupling between the heat dissipation member 300 and the module case 200. For example, according to this embodiment, movement of the heat dissipation member 300 in the left and right direction inside the module case 200 may be suppressed due to the unevenness coupling. In particular, since horizontal movement of the heat dissipation member 300 is suppressed even when vibration or impact is applied to the battery module, the stacking state of the plurality of battery cells 100 and the heat dissipation member 300 may be more stably maintained. Also, in this case, even when swelling occurs in the battery cell 100, swelling may be controlled due to the fixation of the heat dissipation member 300. Also, in this case, the standing state of the plurality of battery cells 100 may be maintained more stably.

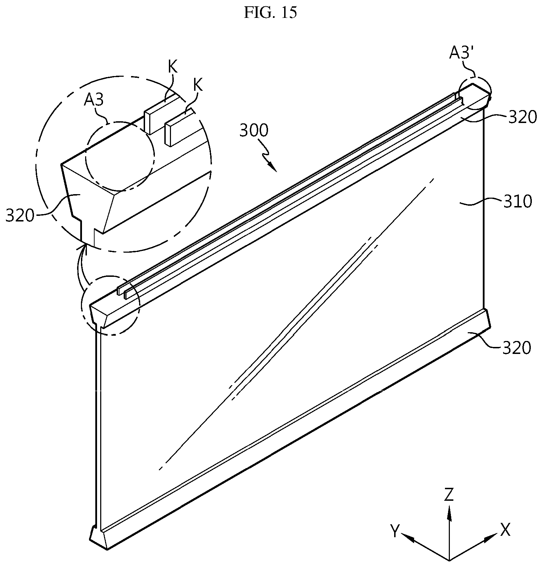

FIG. 15 is a perspective view schematically showing the configuration of a heat dissipation member 300 according to still another embodiment of the present disclosure.

Referring to FIG. 15, the extension portion 320 of the heat dissipation member 300 may have an expansion protrusion on an outer surface, as indicated by K. The expansion protrusion K may be configured to protrude outward from the outer surface of the extension portion 320. For example, the upper extension portion 320 may have an expansion protrusion K to further protrude upward from the upper surface. In addition, although not shown in FIG. 15, the lower extension portion 320 may also have an expansion protrusion K in a form of further protruding downward from the lower surface. The expansion protrusion K may be provided in one form of the uneven configurations J1, J1', J2, J2' described in the embodiments of FIGS. 13 and 14 above.

The expansion protrusion K has a convex shape in the upper and lower direction in the process of heading to the left and right direction, which is the stacking direction of the battery cells 100, as in the uneven configuration J1, J1', J2, J2' described above, and may be formed to be elongated in the front and rear direction. Also, in the module case 200, an expansion groove may be formed in a form corresponding to the expansion protrusion K so that the expansion protrusion K may be inserted.

In particular, the expansion protrusion K of FIG. 15 or the uneven configurations J1, J1', J2, J2' of FIGS. 13 and 14 may be configured to have an unformed portion in the front and rear direction in the extension portion 320 of the heat dissipation member 300. For example, referring to FIG. 15, the expansion protrusion K may have a portion where the expansion protrusion K does not protrude, as indicated by A3 and A3', on the upper surface of the extension portion 320.

According to this embodiment of the present disclosure, the coupling force between the heat dissipation member 300 and the module case 200 may be further improved by the expansion protrusion K, and the contact area between them may be increased to improve the cooling performance. In particular, according to this embodiment, movement of the heat dissipation member 300 in the left and right direction as well as movement of the heat dissipation member 300 in the front and rear direction may be suppressed inside the module case 200. That is, in this embodiment, the movement of the heat dissipation member 300 in all horizontal directions may be controlled.

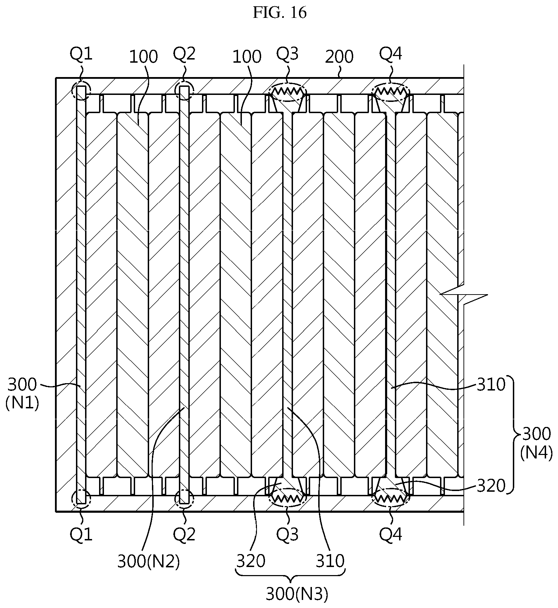

FIG. 16 is a cross-sectional view schematically showing some components of a battery module according to still another embodiment of the present disclosure. For example, FIG. 16 may be regarded as a modified example of FIG. 12.

Referring to FIG. 16, the heat dissipation member 300 may be included in plurality along the stacking direction of the plurality of battery cells 100. In this case, the plurality of heat dissipation members 300 may be spaced apart from each other by a predetermined distance along the stacking direction of the battery cells 100. In particular, at least two or more of the plurality of heat dissipation members 300 may be configured in different shapes. For example, in FIG. 16, four heat dissipation members 300 (N1 to N4) are spaced apart in the left and right direction (Y-axis direction).

Here, among the four heat dissipation members 300 shown in the embodiment of FIG. 16, the leftmost heat dissipation member 300 is referred to as a first member N1, and the heat dissipation members 300 sequentially located in the right direction, which is the inner direction, may be referred to as second to fourth members N2 to N4. At this time, it may be regarded that the fourth member N4 is located at the innermost side in the stacking direction of the battery cells 100 among the four heat dissipation members 300.

In particular, at least some of the four heat dissipation members 300 may have different structures. For example, the first member N1 and the second member N2 may be configured in a different form from the third member N3 and the fourth member N4. More specifically, the first member N1 and the second member N2 may be contacted and coupled with the module case 200 in a structure different from that of the third member N3 and the fourth member N4.

Moreover, the plurality of heat dissipation members 300 arranged in the horizontal direction in one battery module may be configured such that the heat dissipation member 300 disposed at the inner side has better heat transfer performance than the heat dissipation member 300 disposed at the outer side. For example, referring to FIG. 16, the third member N3 and the fourth member N4 located at the inner side have extension portions 320 at both upper and lower ends, and an uneven configuration may be formed at the end of the extension portion 320, as indicated by Q3 and Q4. Meanwhile, the first member N1 and the second member N2 may not have a separate unevenness structure or extension portion 320, like the portions indicated by Q1 and Q2.

In this case, in the case of the third member N3 and the fourth member N4, which are the heat dissipation members 300 located at the inner side, the contact area with the module case 200 may be increased compared to the first member N1 and the second member N2, which are the heat dissipation members 300 located at the relatively outer side. Therefore, the heat dissipation member 300 located at the inner side may increase the amount or speed of heat transfer compared to the heat dissipation member 300 located at the outer side. In general, among the plurality of battery cells 100 stacked in the cell assembly, the temperature of an inner battery cell 100 may be higher than the temperature of an outer battery cell 100. According to this embodiment, heat transfer efficiency of the heat dissipation member 300 disposed adjacent to the inner battery cell 100 is increased, so that better cooling performance of the inner battery cell 100 may be secured. Therefore, by preventing the temperature of the inner battery cell 100 from increasing excessively higher than that of the outer battery cell 100, it may be advantageous to balance the temperature between the inner and outer battery cells 100.

In addition, the heat dissipation member 300 disposed at the outer side may be configured to suppress horizontal movement more strongly than the heat dissipation member 300 disposed at the inner side. In other words, the outer heat dissipation member 300 may be configured to be less easily moved in the horizontal direction than the inner heat dissipation member 300. Such movement suppression may be achieved through an insertion configuration or a frictional force increasing configuration between the heat dissipation member 300 and the module case 200.

For example, the ends of the first member N1 and the second member N2 located relatively at the outer side may be inserted into and fixed to the inner surface of the module case 200, as indicated by Q1 and Q2. Meanwhile, the ends of the third member N3 and the fourth member N4 located relatively at the inner side may be configured not to be inserted into the inner surface of the module case 200, as indicated by Q3 and Q4.

According to this embodiment, when swelling of the battery cell 100 occurs in the cell assembly, movement of the heat dissipation member 300 located at the inner side is allowed to some extent, whereas movement of the heat dissipation member 300 located at the outer side may be relatively difficult. In this case, the swelling of the battery cell 100 may be well absorbed by the inner heat dissipation member 300, whereas the movement of the battery cell 100 may be suppressed by the outer heat dissipation member 300 to prevent damage or breakage of the outermost battery cell 100.

In particular, the cell assembly may be fixed by a thermal resin or the like at the bottom end. Here, when swelling of the cell assembly occurs, the outermost battery cell 100 moves the most, so cracks or tearing of the pouch exterior material may be more generated at the outermost battery cell 100. However, according to this embodiment, the movement of the inner battery cell 100 is allowed to some extent, whereas the movement of the outermost battery cell 100 is suppressed as much as possible, thereby effectively preventing damage to the battery cell 100 together with swelling control.

A battery pack according to the present disclosure may include one or more battery modules according to the present disclosure described above. In addition, the battery pack according to the present disclosure may further include various components other than these battery modules, for example components of the battery pack known at the time of filing of this application, such as a BMS or a bus bar, a pack case, a relay, and a current sensor. In addition, in the battery pack according to the present disclosure, the module case 200 described above may serve as a pack case. In this case, components of a battery pack such as a BMS, a bus bar, and a relay may be included in the module case 200. In this case, the battery pack is also called a cell-to-pack in the aspect that the battery cells 100 are directly accommodated in the pack case.

The battery module according to the present disclosure may be applied to a vehicle such as an electric vehicle or a hybrid electric vehicle. That is, the vehicle according to the present disclosure may include the battery module according to the present disclosure or the battery pack according to the present disclosure. In addition, the vehicle according to the present disclosure may further include various other components included in a vehicle in addition to the battery module or the battery pack. For example, the vehicle according to the present disclosure may further include a vehicle body, a motor, a control device such as an electronic control unit (ECU), and the like in addition to the battery module according to the present disclosure.

Meanwhile, in this specification, terms indicating directions such as "up", "down", "left", "right", "front" and "rear" used, but these terms are merely for convenience of description and may vary depending on the location of an object or the location of an observer, as apparent to those skilled in the art.

The present disclosure has been described in detail. However, it should be understood that the detailed description and specific examples, while indicating preferred embodiments of the disclosure, are given by way of illustration only, and the actual scope of protection is defined by the appended claims.

### Reference Signs

100: battery cell
C1: accommodation portion, C2: sealing portion
200: module case
210: body frame
220: end frame
300: heat dissipation member
310: body portion
320: extension portion
400: cooling member

## Claims

1. A battery module, comprising:
a plurality of battery cells (100) stacked in at least one direction;
a module case (200) configured to accommodate the plurality of battery cells (100) in an inner space; and
a heat dissipation member (300) interposed between at least some of the plurality of battery cells (100) and configured to contact the module case (200) and transfer heat generated from the plurality of battery cells (100) to the module case (200),
**characterized in that** the heat dissipation member (300) includes a body portion (310) configured in a plate shape, and an extension portion (320) provided on at least one end of the body portion (310) and configured to be thicker than the body portion (310),
wherein at least a part of the extension portion (320) is inserted into the module case (200).

2. The battery module according to claim 1,
wherein the heat dissipation member (300) is configured so that both ends located at opposite sides are inserted into the module case (200).

3. The battery module according to claim 1,
wherein the extension portion (320) is configured so that the battery cell (100) is seated thereon.

4. The battery module according to claim 1,
wherein the extension portion (320) is formed so that at least a part thereof becomes thicker toward an end thereof.

5. The battery module according to claim 1,
wherein at least two extension portions (320) are formed at different ends of the body portion (310), and
the at least two extension portions (320) are made of different materials.

6. The battery module according to claim 1,
wherein the extension portion (320) is configured to be detachable from the body portion (310).

7. The battery module according to claim 1, further comprising:
a cooling member (400) located outside the module case (200) and configured to absorb heat transferred to the module case (200) and dissipate the heat to the outside,
wherein the heat dissipation member (300) has the extension portion (320) at an end of a portion where the cooling member (400) is located.

8. The battery module according to claim 1,
wherein the extension portion (320) has concave portions and convex portions repeatedly arranged on the surface in contact with the module case (200).

9. The battery module according to claim 1,
wherein the heat dissipation member (300) is included in plurality along a stacking direction of the plurality of battery cells (100), and
at least two of the plurality of heat dissipation members (300) are configured in different shapes.

10. A battery pack, comprising the battery module according to any one of claims 1 to 9.

11. A vehicle, comprising the battery module according to any one of claims 1 to 9.

## Patentansprüche

1. Batteriemodul, umfassend:
eine Mehrzahl von Batteriezellen (100), welche in wenigstens einer Richtung gestapelt sind;
ein Modulgehäuse (200), welches dazu eingerichtet ist, die Mehrzahl von Batteriezellen (100) in einem Innenraum aufzunehmen; und
ein Wärme-Verteilungselement (300), welches zwischen wenigstens einigen aus der Mehrzahl von Batteriezellen (100) eingefügt und dazu eingerichtet ist, das Modulgehäuse (200) zu kontaktieren und Wärme, welche von der Mehrzahl von Batteriezellen (100) erzeugt wird, zu dem Modulgehäuse (200) zu transferieren,
**dadurch gekennzeichnet, dass** das Wärme-Verteilungselement (300) einen Körperabschnitt (310) umfasst, welcher in einer Plattenform eingerichtet ist, sowie einen Erstreckungsabschnitt (320), welcher an wenigstens einem Ende des Körperabschnitts (310) bereitgestellt und dazu eingerichtet ist, dicker als der Körperabschnitt (310) zu sein,
wobei wenigstens ein Teil des Erstreckungsabschnitts (320) in das Modulgehäuse (200) eingesetzt ist.

2. Batteriemodul nach Anspruch 1,
wobei das Wärme-Verteilungselement (300) derart eingerichtet ist, dass beide Enden, welche an gegenüberliegenden Seiten angeordnet sind, in das Modulgehäuse (200) eingesetzt sind.

3. Batteriemodul nach Anspruch 1,
wobei der Erstreckungsabschnitt (320) derart eingerichtet ist, dass die Batteriezelle (100) darauf sitzt.

4. Batteriemodul nach Anspruch 1,
wobei der Erstreckungsabschnitt (320) derart gebildet ist, dass wenigstens ein Teil davon in Richtung eines Endes davon dicker wird.

5. Batteriemodul nach Anspruch 1,
wobei wenigstens zwei Erstreckungsabschnitte (320) an unterschiedlichen Enden des Körperabschnitts (310) gebildet sind, und
die wenigstens zwei Erstreckungsabschnitte (320) aus unterschiedlichen Materialien hergestellt sind.

6. Batteriemodul nach Anspruch 1,
wobei der Erstreckungsabschnitt (320) dazu eingerichtet ist, von dem Körperabschnitt (310) lösbar zu sein.

7. Batteriemodul nach Anspruch 1, ferner umfassend:
ein Kühlelement (400), welches außerhalb des Modulgehäuses (200) angeordnet und dazu eingerichtet ist, Wärme zu absorbieren, welche zu dem Modulgehäuse (200) transferiert wird, und die Wärme zu der Außenseite zu verteilen,
wobei das Wärme-Verteilungselement (300) den Erstreckungsabschnitt (320) an einem Ende eines Abschnitts aufweist, an welchem das Kühlelement (400) angeordnet ist.

8. Batteriemodul nach Anspruch 1,
wobei der Erstreckungsabschnitt (320) konkave Abschnitte und konvexe Abschnitte aufweist, welche wiederholt an der Fläche in Kontakt mit dem Modulgehäuse (200) angeordnet sind.

9. Batteriemodul nach Anspruch 1,
wobei das Wärme-Verteilungselement (300) in einer Mehrzahl entlang einer Stapelrichtung der Mehrzahl von Batteriezellen (100) umfasst ist, und
wenigstens zwei aus der Mehrzahl von Wärme-Verteilungselementen (300) in unterschiedlichen Formen eingerichtet sind.

10. Batteriepack, umfassend das Batteriemodul nach einem der Ansprüche 1 bis 9.

11. Fahrzeug, umfassend das Batteriemodul nach einem der Ansprüche 1 bis 9.

## Revendications

1. Module de batterie, comprenant :
une pluralité d'éléments de batterie (100) empilés dans au moins une direction ;
un boîtier de module (200) configuré pour recevoir la pluralité d'éléments de batterie (100) dans un espace intérieur ; et
un organe de dissipation de chaleur (300) interposé entre au moins certains de la pluralité d'éléments de batterie (100) et configuré pour entrer en contact avec le boîtier de module (200) et transférer de la chaleur générée à partir de la pluralité d'éléments de batterie (100) au boîtier de module (200),
**caractérisé en ce que** l'organe de dissipation de chaleur (300) comprend une portion corps (310) configurée sous une forme de plaque, et une portion d'extension (320) fournie sur au moins une extrémité de la portion corps (310) et configurée pour être plus épaisse que la portion corps (310),
dans lequel au moins une partie de la portion d'extension (320) est insérée dans le boîtier de module (200).

2. Module de batterie selon la revendication 1,
dans lequel l'organe de dissipation de chaleur (300) est configuré de façon à ce que les deux extrémités situées au niveau de côtés opposés soient insérées dans le boîtier de module (200).

3. Module de batterie selon la revendication 1,
dans lequel la portion d'extension (320) est configurée de façon à ce que l'élément de batterie (100) soit placé sur celle-ci.

4. Module de batterie selon la revendication 1,
dans lequel la portion d'extension (320) est formée de façon à ce qu'au moins une partie de celle-ci devienne plus épaisse vers une extrémité de celle-ci.

5. Module de batterie selon la revendication 1,
dans lequel au moins deux portions d'extension (320) sont formées à des extrémités différentes de la portion corps (310), et
les au moins deux portions d'extension (320) sont faites de matériaux différents.

6. Module de batterie selon la revendication 1,
dans lequel la portion d'extension (320) est configurée pour pouvoir être détachée de la portion corps (310).

7. Module de batterie selon la revendication 1, comprenant en outre :
un organe de refroidissement (400) situé à l'extérieur du boîtier de module (200) et configuré pour absorber de la chaleur transférée au boîtier de module (200) et dissiper la chaleur vers l'extérieur,
dans lequel l'organe de dissipation de chaleur (300) a la portion d'extension (320) à une extrémité d'une portion où l'organe de refroidissement (400) est situé.

8. Module de batterie selon la revendication 1,
dans lequel la portion d'extension (320) a des portions concaves et des portions convexes agencées de manière répétée sur la surface en contact avec le boîtier de module (200).

9. Module de batterie selon la revendication 1,
dans lequel l'organe de dissipation de chaleur (300) est compris dans une pluralité le long d'une direction d'empilement de la pluralité d'éléments de batterie (100), et
au moins deux de la pluralité d'organes de dissipation de chaleur (300) sont configurés sous des formes différentes.

10. Bloc-batterie, comprenant le module de batterie selon l'une quelconque des revendications 1 à 9.

11. Véhicule, comprenant le module de batterie selon l'une quelconque des revendications 1 à 9.
